# EUROPÄISCHE PATENTSCHRIFT

(11) **EP 1 388 511 B1**
(45) Veröffentlichungstag und Bekanntmachung des Hinweises auf die Patenterteilung: **12.07.2006**
(21) Anmeldenummer: 03004574.4
(22) Anmeldetag: 28.02.2003
(51) Int. Cl.: B65G 49/06

(54) **Einrichtung zum Absenken von Glasplatten auf Stapelgestelle**
Mechanism to lower glass sheets onto a stacking rack
Méchanisme pour abaisser des feuilles de verre sur un casier de stockage

(30) Priorität: 10.08.2002 DE 10236775
(43) Veröffentlichungstag der Anmeldung: 11.02.2004
(73) Patentinhaber: Grenzebach Maschinenbau GmbH, 86663 Asbach-Bäumenheim/Hamlar (DE)
(72) Erfinder: Herre, Erwin, 86675 Buchdorf (DE); Pfeilschifter, Thomas, 86687 Kaisheim (DE)
(74) Vertreter: Gallo, Wolfgang

(56) Entgegenhaltungen:
- EP-A- 0 982 251
- DE-A- 2 357 118
- FR-A- 2 012 911
- US-A- 3 679 073

## Beschreibung

Die Erfindung betrifft eine Einrichtung zum variablen Absenken von Glasplatten auf Stapelgestelle, wobei diese Einrichtung als integrierte Komponente des Glasplattengreifers einer Stapelvorrichtung für Glasplatten vorgesehen ist.

EP 0 982 251 und FR 2 012 911; weisen Einrichtungen zum behandeln von Glasplatten auf Stapelgestelle.

Bei der Flachglasherstellung wird das erzeugte Glas nach dem Erkalten in Platten bzw. Tafeln der gewünschten Größe geschnitten und gebrochen, und die so konfektionierten Rohglasplatten werden mittels einer Stapelvorrichtung von der Förderstrecke abgenommen und auf Stapelgestelle gestapelt. Die Stapelvorrichtung umfaßt einen an einem entsprechend beweglichen Arm angeordneten Plattengreifer mit einem Saugrahmen zum Aufnehmen der Glasplatten. Der Plattengreifer nimmt die Glasplatten aus ihrer liegenden Position von der Förderstrecke auf und wird dann mittels des Arms zu einem neben der Förderstrecke aufgestellten Stapelgestell bewegt und gleichzeitig aus der horizontalen Position in eine etwa vertikale Position geschwenkt, um die jeweilige Glasplatte stehend auf dem Stapelgestell abzusetzen. Das Stapelgestell hat eine etwa L-artige Konfiguration mit einem stehenden Schenkel, an den sich die abgesetzten Glasplatten mit geringer Neigung aus der Vertikalen anlehnen, und einem unteren liegenden Schenkel, der die Aufstandsfläche für die abzusetzenden Glasplatten bildet. Die Aufstandsfläche ist nicht genau horizontal, sondern verläuft schwach geneigt zum stehenden Schenkel hin abfallend.

Letzteres bedeutet, dass die Höhenposition der Aufstandsfläche sich von Glasplatte zu Glasplatte geringfügig erhöht. Außerdem ist aus Handhabungsgründen bei der späteren Abnahme der Glasplatten von den Stapelgestellen notwendig, nach dem Abstellen einer bestimmten Anzahl von Glasplatten (entsprechend einem Paket) Distanzleisten einzulegen und dadurch deutliche Lücken zwischen den Glasplattenpaketen zu bilden. Für die erste Glasplatte eines neuen Pakets ergibt sich also ein deutlicher Höhensprung der Aufstandsfläche auf dem Stapelgestell. Um der nicht genau bekannten tatsächlichen Höhe der Aufstandsfläche für eine abzusetzende Glasplatte Rechnung zu tragen, werden die Stapelvorrichtungen üblicherweise so betrieben, dass der Plattengreifer die in die etwa vertikale Position geschwenkte aufgenommene Glasplatte bis etwa 80 mm über die Aufstandsfläche bewegt und dann vorsichtig bis zum tatsächlichen Aufsetzen absenkt. Dabei haben sich jedoch die beiden folgenden Probleme gezeigt.

Zum einen ist die Absenkdistanz von ca. 80 mm noch relativ groß, und wenn die nächste Glasplatte eines Pakets an eine schon gestapelte Glasplatte herangefahren und dann in die Endposition abgesenkt wird, besteht die Gefahr, dass die schon gestapelte Glaplatte im untersten Bereich durch die Kante der abzusenkenden Glasplatte verkratzt wird.

Das andere Problem liegt darin, dass die Glasplatten aufgrund ihrer Größe (bis zu ca. 3 m x 7 m) ein enormes Gewicht haben und der Plattengreifer aufgrund seiner für die größtmöglichen Glasplatten ausgelegten Dimensionierung ein noch sehr viel höheres Gewicht aufweist, so dass, weil die Absenkbewegung ja nicht trägheitslos gestoppt werden kann, sich auch beim vorsichtigen Absenken auf die Aufstandsfläche (die ja keine Vollfläche ist, sondem aus Holmen des Stapelgestells besteht) ein hartes Aufsetzen der Kanten der Glasplatten ergeben kann.

Aufgabe der Erfindung ist es, eine Absenkeinrichtung als Bestandteil einer Stapelvorrichtung zu schaffen, mit der beide genannten Probleme bewältigt werden können.

Diese Aufgabe wird gemäß der Erfindung durch die im Anspruch 1 angegebene Anordnung gelöst.

Vorteilhafte Ausgestaltungen der Erfindung sind Gegenstand der Unteransprüche.

Mit der erfindungsgemäßen Absenkeinrichtung wird, wie sich aus den Erläuterungen zum nachstehend beschriebenen Ausführungsbeispiel im einzelnen ergibt, der abschließende Absenkvorgang jeder zweiten und weiteren Glasplatte eines Pakets auf das Stapelgestell auf eine minimale Distanz von nur ca. 10 bis 20 mm reduziert, so dass das Problem des Verkratzens einer zuvor schon abgestellten Glasplatte eines Pakets über einen größeren Randbereich nicht mehr besteht. Zum anderen erfolgt ein "weiches" Aufsetzen jeder Glasplatte auf das Stapelgestell, wobei im Augenblick des Aufsetzens im wesentlichen nur das Eigengewicht der Glasplatte wirkt, und nicht auch das gesamte Gewicht des Plattengreifers, und wobei insbesondere kein Nachdrücken des Plattengreifers durch massenträgheitsbedingtes geringfügiges Weitergehen der Absenkbewegung nach dem Abschalten bis zum tatsächlichen Stillstand erfolgt.

Die Erfindung wird nachstehend unter Bezugnahme auf ein Ausführungsbeispiel nach Aufbau und Wirkungsweise unter Bezugnahme auf die anliegenden Zeichnungen mehr im einzelnen beschrieben. In den Zeichnung zeigt:
- Fig. 1: In Rückansicht einen Plattengreifer einer Stapelvorrichtung mit einer abzusetzenden Glasplatte,
- Fig. 2: eine Seitenansicht der in Figur 1 gezeigten Anordnung mit einem strichpunktiert angedeuteten Stapelgestell,
- Fig. 3: in vergrößerter Darstellung einen Schnitt längs der Linie III-III in Figur 1
- Fig. 4A: die Einzelheit IV in Fig. 3 in einer ersten Betriebsstellung (vor Aufnehmen der Glasplatte), und
- Fig. 4B: die Einzelheit IV in Figur 3 in weiter vergrößerter Darstellung in einer zweiten Betriebsposition (nach Aufnehmen der Glasplatte).

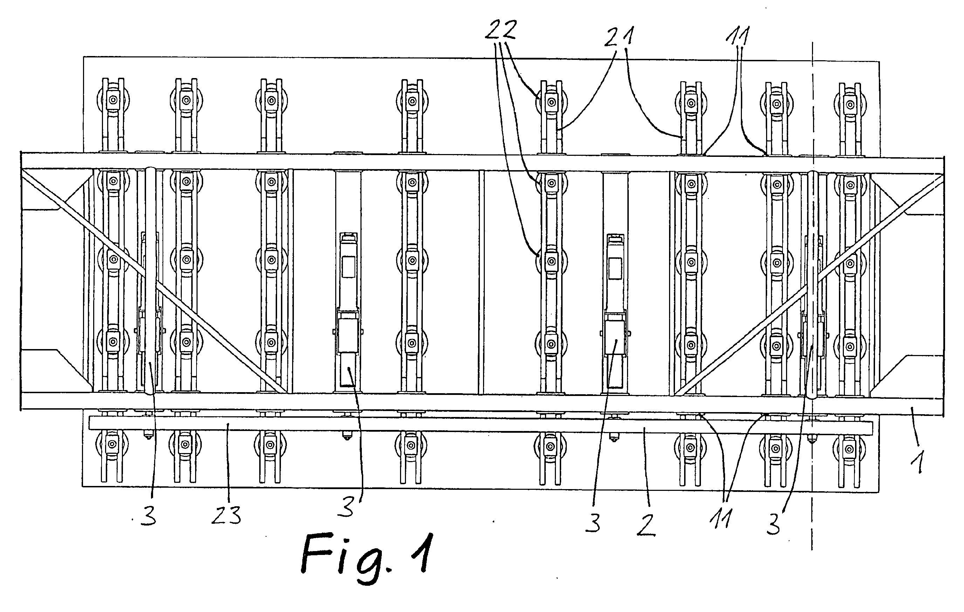

Die Figuren 1 bis 3 zeigen einen Plattengreifer einer Stapelvorrichtung, wobei der Einfachheit halber der bewegliche Arm der Stapelvorrichtung sowie die Schwenkeinrichtung, welche den Arm mit dem Plattengreifer verbindet, nicht dargestellt sind. Der dargestellte Plattengreifer besteht aus einer Saugtraverse 1 und einem Saugrahmen 2, wobei die Saugtraverse den Tragrahmen für den Saugrahmen bildet. Der Saugrahmen 2 besteht seinerseits aus einer Anzahl von vertikalen Saugbalken 21, die jeweils wiederum eine Anzahl von Saugern 22 tragen und in ihrem unteren Bereich durch einen Querbalken 23 miteinander verbunden sind. Der Saugrahmen 2 ist in der Saugtraverse 1 vertikal beweglich geführt, indem die Saugbalken 21 jeweils in oberen und unteren Führungen 11 der Saugtraverse geführt sind.

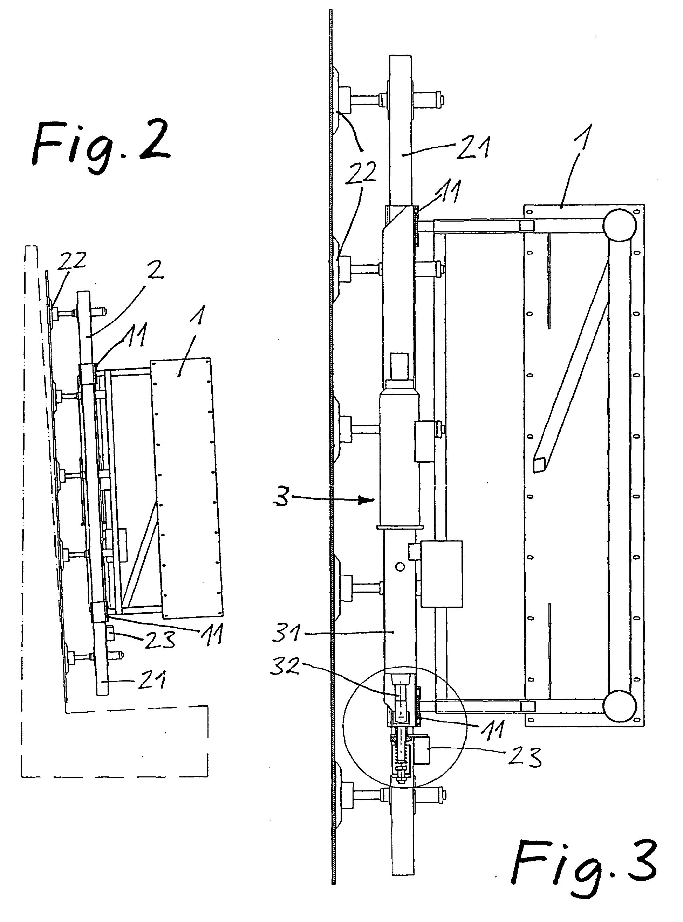

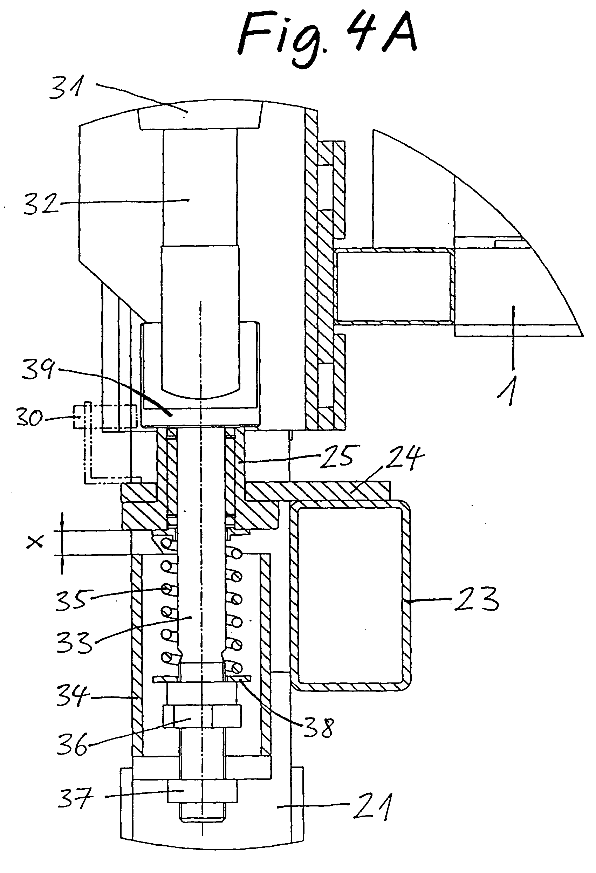

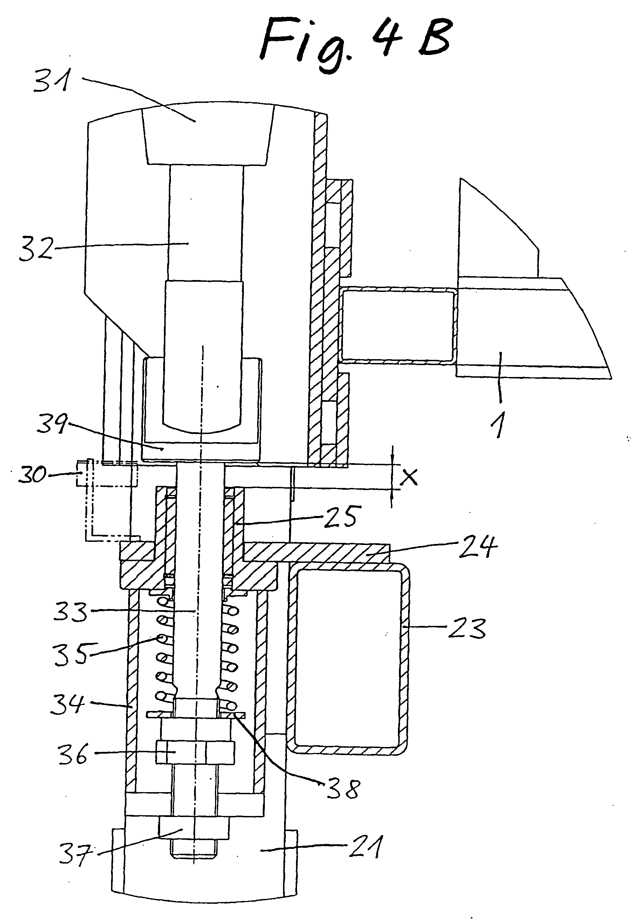

Wie aus Figur 1 weiter hervorgeht, sind über die horizontale Länge der Saugtraverse 1 verteilt und zwischen einzelnen Saugbalken 21 Absenkorgane 3 angeordnet, die in der Saugtraverse 1 montiert sind und an denen unten der Querbalken 23 des Saugrahmens 2 aufgehängt ist. In dem vergrößerten Schnitt nach Figur 3 ist ein solches Absenkorgan 3 teils in Seitenansicht und im Bereich der Einzelheit IV im Schnitt dargestellt. Die Figuren 4A und 4B zeigen vergrößert den konstruktiven Aufbau und die Funktion der Einzelheit IV in Figur 3. Diese werden im folgenden näher erläutert.

In den Figuren 4A und 4B sind Fragmente der Saugtraverse 1 sichtbar, sowie jeweils ein darin montiertes Absenkorgan 3. Ebenso sind in diesen Figuren Fragmente des relativ zur Saugtraverse 1 beweglichen Saugrahmens 2 sichtbar, nämlich der alle Saugbalken miteinander verbindende Querbalken 23 und einer der Saugbalken 21. Der Querbalken 23 ist im Bereich jedes Absenkorgans 3 mit einer Platte 24 und einer Hülse 25 fest verbunden, die also ebenfalls Teile des relativ zur Saugtraverse 1 beweglichen Saugrahmens 2 verkörpern.

Jedes Absenkorgan besteht aus einem Elektrozylinder 31 mit einem Hubweg von beispielsweise etwa 200 mm. Die Hubspindel 32 jedes Elektrozylinders 31 trägt über eine Stange 33 eine Traghülse 34. Zwischen der Traghülse 34 und der Hülse 25 ist eine starke Druckfeder 35 eingebaut, über welche sich im Bereich des jeweiligen Absenkorgans nun der Saugrahmen 2 über den Querbalken 23, die Platte 24 und die Hülse 25 auf der Traghülse 34 abstützt. Der untere Bereich der Stange 33 ist dabei als Gewindestange ausgebildet und trägt zwei Einstellmuttern, nämlich eine obere Einstellmutter 36 und eine untere Einstellmutter 37. Dabei ist mit der unteren Einstellmutter 37 die Axialposition der Traghülse 34 auf der Stange 33 einstellbar, während mit der oberen Einstellmutter 36 die Axialposition eines Federwiderlagers 38 auf der Stange 33 und damit die Vorspannung der Feder 35 einstellbar ist.

Die eben beschriebene Konstruktion ermöglicht eine geringfügige Vertikalbewegung des Saugrahmens 2 mit Bezug auf die Elektrozylinder 31, und zwar unabhängig von dem Ausfahrweg der Hubspindeln 32 der selbstverständlich synchron betätigten Elektrozylinder. Diese Distanz ist in den Figuren 4A und 4B durch die Distanz x bezeichnet.

Die Federn 35 aller Absenkorgane sind so bemessen und eingestellt, dass die Summe der Federdruckkräfte geringfügig kleiner als das Eigengewicht des Saugrahmens 2 ist. Das hat zur Folge, dass in der vertikalen Position des Plattengreifers, wie sie in den Figuren 1 bis 3 dargestellt ist, die etwa vertikal nach unten wirkende Gewichtskraft des Saugrahmens 2 gerade die Summe der Federdruckkräfte der Druckfedern 35 übersteigt und bewirkt, dass der Saugrahmen 2 diese Federn zusammendrückt, so dass an jedem Absenkorgan 3 die Hülse 25 auf der Traghülse 24 aufsitzt. Wird aber der Plattengreifer in die Horizontale geschwenkt, also in die Position, in der er jeweils eine Glasplatte von der Förderstrecke aufnimmt, drücken die Federn 35 den Saugrahmen nach "oben", wodurch an den Absenkorganen jeweils die Hülse 25 des Saugrahmens 2 von der Traghülse 34 abgehoben und verschoben wird, bis sie an der Unterseite des Kopfs 39 der Hubspindel 32 des jeweiligen Elektrozylinders anschlägt. Denn sobald der Saugrahmen sich nicht mehr im wesentlichen in der Vertikalposition befindet, verringert sich die in Richtung der Saugbalken und damit in Wirkungsrichtung der Federn 35 verlaufende Kraftkomponente der Gewichtskraft des Saugrahmens 2 unter die Federkraftsumme. Damit befindet sich dann jeweils die Hülse 25 um die genannte Distanz x über der Traghülse 34. Das ist die Position, wie sie in Figur 4A dargestellt ist. In dieser Position nimmt der Plattengreifer eine zu stapelnde Glasplatte von der Förderstrecke auf, hebt sie von dieser ab und schwenkt sie dann in die etwa vertikale Stellung, wie dies in den Figuren 2 und 3 gezeigt ist.

Befindet sich nun der Plattengreifer in nach dem Schwenken mit der aufgenommenen Glasplatte in der in den Figuren 2 und 3 gezeigten annähernd vertikalen Stellung, addiert sich auch das Gewicht der getragenen Glasplatte zum Eigengewicht des Saugrahmens 2, und dieses Gesamtgewicht ist wesentlich größer als die Summe der Druckfederkräfte der Federn 35. Dadurch senkt sich nun der Saugrahmen 2 um die Distanz x ab, bis an jedem Absenkorgan 3 die Hülse 25 auf der Traghülse 24 aufsitzt und nunmehr das obere Ende der Hülse 25 einen der Distanz x entsprechenden Abstand vom Kopf 29 der jeweiligen Hubspindel 32 hat. Diese Position ist in Figur 4B dargestellt.

Beim Absenken einer Glasplatte auf das Stapelgestell werden, nachdem der Plattengreifer die Glasplatte in eine bestimmte Höhe kurz oberhalb der Aufstandsfläche des Stapelgestells gebracht hat, die Elektrozylinder 31 der Absenkorgane 3 synchron betätigt und fahren die Hubspindeln 32 aus. In dem Augenblick, in welchem die Glasplatte mit ihrer unterer Kantenfläche auf der Aufstandsfläche des Stapelgestells aufsitzt, erfolgt nun, weil die Hubspindeln 32 sich noch weiter in der Ausfahrbewegung befinden, ein Abheben jeder Hülse 25 von der Traghülse 34. Ein an der Platte 24 befestigtes Organ 30 eines Näherungsschalters meldet diese Abhebebewegung, was das sofortige Abschalten des Elektrozylinders bewirkt, so dass die tatsächliche Abhebebewegung nur einen Bruchteil der Distanz x ausmacht. Die Distanz x kann übrigens mittels der unteren Einstellmutter 37 durch Verstellen der Axialposition der Traghülse 34 auf der Stange 33 eingestellt werden.

Beim Absenken der Glasplatte auf das Stapelgestell erfolgt das Aufsetzen der Glasplatte mit ihrer unteren Kantenfläche auf das Stapelgestell "weich", weil im wesentlichen nur das Eigengewicht der Glasplatte und ein geringer Anteil des Saugrahmengewichts wirksam sind. Ein Nachdrücken durch die Absenkeinrichtung kann nicht erfolgen, weil, wie eben beschrieben, die Auslaufbewegung der Hubspindeln 32 durch das Abheben jeder Hülse 25 von der zugehörigen Traghülse 34 aufgenommen wird. Nach dem erfolgten Aufsetzen und dem Auslauf der Absenkbewegung erfolgt das Abblasen der Glasplatte von den Saugnäpfen, so dass sich diese an die zuvor auf dem Stapelgestell abgesetzte Glasplatte, das Gestell oder Distanzleisten anlehnt. Da das Eigengewicht des Saugrahmens in der etwa vertikalen Position des Plattengreifers, wie gesagt, geringfügig größer ist als die Summe der Druckkräfte der Federn 35, bleibt der Saugrahmen auch nach Abblasen der Glasplatte noch auf den Traghülsen 34 aufsitzend und wird nicht zugleich nach oben gedrückt.

Das Stapeln der Glasplatten erfolgt damit in folgender Weise:

Zum Stapeln der ersten Platte jedes Plattenpakets sind die Elektrozylinder vollständig eingefahren, und der Plattengreifer bewegt die Glasplatte über das Stapelgestell, bis die Unterkante der Glasplatte etwa 80 mm über den Gestellaufstandsflächen steht. Dann werden zum Absenken der Glasplatte die Elektrozylinder betätigt. Beim Aufsitzen der Glasplatte auf dem Gestell wird beim Stoppen der Elektrozylinder die aktuelle Ausfahrposition automatisch gespeichert.

Zum Aufnehmen der nächsten Glasplatte fahren die Elektrozylinder dann wieder in die Grundstellung ein. Beim Stapeln der folgenden Platten eines Pakets fahren dann aber die Elektrozylinder jeweils gleich in die beim vorangegangenen Absetzvorgang gespeicherte Position abzüglich einer Distanz von etwa 10 bis 20 mm aus, so dass dann die abschließenden Absenkbewegung nur noch etwa 10 bis 20 mm beträgt.

Im Augenblick des Aufsetzen der Glasplattenunterkante auf das Stapelgestell wirkt nur das Glasplattengewicht und ein kleiner Bruchteil des Saugrahmengewichts, da der restliche Teil des Gewichts des Saugrahmens durch die Federn 35 kompensiert werden.

## Patentansprüche

1. Einrichtung zum Absenken von Glasplatten auf Stapelgestelle, die zwischen der Saugtraverse (1) eines Plattengreifers und dem von diesem getragenen und relativ dazu vertikal beweglich geführten Saugrahmen (2) angeordnet ist und mindestens ein Absenkorgan (3) umfaßt, mit folgenden Merkmalen:
a) jedes Absenkorgan (3) weist ein ausfahrbares Hubelement (32) auf, das an seinem freien Ende ein Tragelement (34) zum Abstützen des Saugrahmens (2) aufweist,
b) der Saugrahmen ist um eine gewisse kurze Distanz (x) vertikal beweglich am Hubelement (32) gehaltert,
c) zwischen dem Tragelement (34) und dem Saugrahmen (2) ist eine Druckfeder eingebaut, wobei die Summe der Federkräfte der Druckfedern aller vorhandenen Absenkorgane (3) größer als das Eigengewicht des Saugrahmens ist,
d) die vertikale Bewegungsdistanz (x) zwischen dem Saugrahmen (2) und dem Hubelement (32) wird durch einen oberen Anschlage zwischen dem Hubelement und dem Saugrahmen und einen unteren Anschlag zwischen dem Saugrahmen und dem oberen Ende des Tragelements (34) festgelegt auf welchem der Saugrahmen unter teilweisem Zusammendrücken der Druckfeder (35) aufsitzen kann.

2. Einrichtung nach Anspruch 1, wobei jedes Huborgan durch einen Elektrozylinder (31) mit Hubspindel (32) gebildet ist.

3. Einrichtung nach Anspruch 1 oder 2, wobei die mögliche Bewegungsdistanz (x) zwischen dem Hubelement (32) und dem Saugrahmen (2) durch Einstellbarkeit (36) der Axialposition des Tragelements (34) am freien Ende des Hubelements (32) einstellbar ist.

4. Einrichtung nach einem der Ansprüche 1 bis 3, wobei die Federkraft der Druckfeder (35) durch axiale Verstellbarkeit (37) eines Federanschlags (38) verstellbar ist.

5. Einrichtung nach einem der Ansprüche 1 bis 4, wobei das freie untere Ende des Hubelements (32) durch eine Tragstange (33) gebildet ist, an deren unterem Ende das hülsenförmige oder becherförmige Tragelement (34) montiert ist und auf welcher die Druckfeder (35) als Spiralfeder angeordnet ist.

6. Einrichtung nach den Ansprüchen 4 und 5, wobei das untere Ende der Tragstange (32) als Gewindestange ausgebildet ist, die innerhalb des hülsen- oder becherförmigen Tragelements (34) eine Einstellmutter (37) zum Einstellen der Axialposition eines Federtellers (38) und unterhalb des Tragelements (34) eine Einstellmutter (37) zum Einstellen des Axialposition des Tragelements (34) aufweist.

7. Einrichtung nach einem der Ansprüche 1 bis 6, wobei ein Sensor (30) zum Erfassen einer Relativbewegung zwischen dem Saugrahmen (2) und dem Hubelement (32) vorgesehen ist.

8. Einrichtung nach Anspruch 7, wobei der Sensor als Näherungsschalter ausgebildet ist, der ein Abheben des Saugrahmens (2) von der auf dem Tragelement (34) aufsitzenden Position meldet.

## Claims

1. A device for lowering glass plates on to stacking racks, which device is disposed between the suction crossmember (1) of a plate gripper and the suction frame (2) that is carried by said plate gripper and that is guided so as to be movable vertically relative to same, and which device comprises at least one lowering element (3), with the following features:
a) each lowering element (3) has an extensible lifting element (32) which, at its free end, has a carrying element (34) for supporting the suction frame (2),
b) the suction frame is mounted on the lifting element (32) so as to be vertically movable by a certain short distance (x),
c) a compression spring is fitted in between the carrying element (34) and the suction frame (2), the sum of the spring forces of the compression springs of all provided lowering elements (3) being greater than the own weight of the suction frame,
d) the vertical movement distance (x) between the suction frame (2) and the lifting element (32) is defined by an upper stop between the lifting element and the suction frame and by a lower stop between the suction frame and the upper end of the carrying element (34) on which the suction frame can be supported with partial compression of the compression spring (35).

2. The device according to claim 1, wherein each lifting element consists of an electric cylinder (31) having a lifting spindle (32).

3. The device according to either of claims 1 or 2, wherein the possible movement distance (x) between the lifting element (32) and the suction frame (2) is settable through settability (36) of the axial position of the carrying element (34) at the free end of the lifting element (32).

4. The device according to any one of claims 1 to 3, wherein the spring force of the compression spring (35) is adjustable through axial adjustability (37) of a spring stop (38).

5. The device according to any one of claims 1 to 4, wherein the free lower end of the lifting element (32) consists of a carrying rod (33) at the lower end of which is mounted the sleeve-type or cup-type carrying element (34) and on which carrying rod is disposed the compression spring (35) as a spiral spring.

6. The device according to claims 4 and 5, wherein the lower end of the carrying rod (32) is realized as a threaded rod which, within the sleeve-type or cup-type carrying element (34), has a setting nut (37) for setting the axial position of a spring collar (38) and, beneath the carrying element (34), has a setting nut (37) for setting the axial position of the carrying element (34).

7. The device according to any one of claims 1 to 6, wherein a sensor (30) is provided for sensing a relative movement between the suction frame (2) and the lifting element (32).

8. The device according to claim 7, wherein the sensor is realized as a proximity switch which signals raising of the suction frame (2) from the position of support on the carrying element (34).

## Revendications

1. Dispositif pour abaisser des plaques de verre sur des casiers de stockage, qui est disposé entre le palonnier à vide (1) d'un préhenseur de plaques et le cadre à vide (2) porté par ledit préhenseur de plaques et guidé de façon mobile verticalement par rapport à celui-ci et qui comprend au moins un organe d'abaissement (3), comportant les caractéristiques suivantes :
a) chaque organe d'abaissement (3) présente un élément de levage déplaçable (32) qui présente à son extrémité libre un élément porteur (34) pour supporter le cadre à vide (2),
b) le cadre à vide est maintenu sur l'élément de levage (32) de façon mobile verticalement d'une certaine distance courte (x),
c) entre l'élément porteur (34) et le cadre à vide (2) est monté un ressort de pression, la somme des forces élastiques des ressorts de pression de tous les organes d'abaissement existants (3) étant supérieure au poids propre du cadre à vide,
d) la distance de déplacement verticale (x) entre le cadre à vide (2) et l'élément de levage (32) est fixée par une butée supérieure entre l'élément de levage et le cadre à vide et une butée inférieure entre le cadre à vide et l'extrémité supérieure de l'élément porteur (34) sur lequel le cadre à vide peut reposer en comprimant partiellement le ressort de pression (35).

2. Dispositif selon la revendication 1, chaque organe de levage étant formé par un vérin électrique (31) avec tige de levage (32).

3. Dispositif selon la revendication 1 ou 2, la distance de déplacement possible (x) entre l'élément de levage (32) et le cadre à vide (2) étant réglable par possibilité de réglage (36) de la position axiale de l'élément porteur (34) à l'extrémité libre de l'élément de levage (32).

4. Dispositif selon l'une des revendications 1 à 3, la force élastique du ressort de pression (35) étant ajustable par possibilité d'ajustage axial (37) d'une butée de ressort (38).

5. Dispositif selon l'une des revendications 1 à 4, l'extrémité inférieure libre de l'élément de levage (32) étant formée par une tige porteuse (33) à l'extrémité inférieure de laquelle l'élément porteur (34) en forme de douille ou de godet est monté et sur laquelle le ressort de pression (35) est disposé en tant que ressort en spirale.

6. Dispositif selon les revendications 4 et 5, l'extrémité inférieure de la tige porteuse (32) étant conçue comme une tige filetée qui présente, à l'intérieur de l'élément porteur (34) en forme de douille ou de godet, un écrou de réglage (37) servant à régler la position axiale d'une cuvette de ressort (38) et, au-dessous de l'élément porteur (34), un écrou de réglage (37) servant à régler la position axiale de l'élément porteur (34).

7. Dispositif selon l'une des revendications 1 à 6, un capteur (30) destiné à détecter un mouvement relatif entre le cadre à vide (2) et l'élément de levage (32) étant prévu.

8. Dispositif selon la revendication 7, le capteur étant conçu comme un détecteur de proximité qui signale un soulèvement du cadre à vide (2) à partir de la position dans laquelle il repose sur l'élément porteur (34).
